(19)

**Europäisches Patentamt**
**European Patent Office**
**Office européen des brevets**

(11) **EP 2 639 259 A1**

(12) **EUROPEAN PATENT APPLICATION**
published in accordance with Art. 153(4) EPC

(43) Date of publication:
**18.09.2013 Bulletin 2013/38**

(21) Application number: **11839232.3**

(22) Date of filing: **11.11.2011**

(51) Int Cl.:
*C08J 9/12* (2006.01)          *C08K 3/00* (2006.01)
*C08L 33/06* (2006.01)          *C09J 7/02* (2006.01)
*C09J 11/04* (2006.01)          *C09J 133/04* (2006.01)

(86) International application number:
**PCT/JP2011/076048**

(87) International publication number:
**WO 2012/063935 (18.05.2012 Gazette 2012/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.11.2010  JP 2010254341**

(71) Applicant: **Nitto Denko Corporation**
**Osaka 567-8680 (JP)**

(72) Inventors:
• **TERADA, Yoshio**
**Ibaraki-shi**
**Osaka 567-8680 (JP)**

• **TOJO, Midori**
**Ibaraki-shi**
**Osaka 567-8680 (JP)**
• **NAKAYAMA, Yusuke**
**Ibaraki-shi**
**Osaka 567-8680 (JP)**

(74) Representative: **Grünecker, Kinkeldey, Stockmair & Schwanhäusser**
**Leopoldstrasse 4**
**80802 München (DE)**

(54) **BUBBLE-CONTAINING THERMALLY-CONDUCTIVE RESIN-COMPOSITION LAYER, MANUFACTURING METHOD THEREFOR, AND PRESSURE-SENSITIVE ADHESIVE SHEET USING SAID RESIN-COMPOSITION LAYER**

(57)    A bubble-containing thermally conductive resin composition layer contains at least: (a) an acrylic polymer containing an alkyl (meth)acrylate as a monomer main component; (b) thermally conductive particles; and (c) bubbles.

FIG.1

EP 2 639 259 A1

**Description**

Technical Field

The present invention relates to a bubble-containing thermally conductive resin composition layer, a producing method thereof, and a pressure-sensitive adhesive sheet using the bubble-containing thermally conductive resin composition layer, to be more specific, to a bubble-containing thermally conductive resin composition layer that is applicable for a pressure-sensitive adhesive sheet having both thermally conductive properties and followability to unevenness and a producing method thereof.

Background Art

By allowing a resin composition to contain a tiller, conventionally, its strength has been improved or its thermally conductive properties have been improved as compared to a case of using a resin alone, which serves as a base. In particular, a thermally conductive adhesive resin composition in which thermally conductive particles for improving the thermally conductive properties are dispersed in a base resin using an epoxy resin has been widely used for uses of electronic components such as an encapsulation of a chip component or a formation of an insulating layer between a circuit mounted with a heat generating component and a heat dissipating board.

In the following Patent Document 1, for example, a thermally conductive adhesive sheet with a metal foil (hereinafter, also referred to as a "high thermally conductive adhesive sheet with a metal foil") in which a high thermally conductive resin layer formed from a thermally conductive adhesive composition containing a polymer component such as a thermoplastic resin and a thermosetting resin and thermally conductive particles into a sheet shape is laminated on a metal foil layer formed by using a metal foil is described. It is also described that the high thermally conductive adhesive sheet with a metal foil is used in adhesion of a semiconductor chip. However, there has been a problem that although a thermally conductive material in a sheet type has an excellent handling ability, it is harder than grease, so that its adaptability at a contact interfacial surface is poor and its thermal resistance (contact thermal resistance) by an air layer or the like is high.

Also, there may be a case where a cooling member such as a heat sink and a circuit board, which serve as an adherend, have unevenness on the surface thereof or have a curved surface structure. Furthermore, there may be a case where the adherend itself is curved. In such a case, there is a problem of poor adhesiveness of a thermally conductive sheet to the adherend. Also, another component may be mounted on a board or the like and in such a case, the board may have a structure of having a plurality of irregularities. In this way, when the thermally conductive sheet is bonded to the adherend having an uneven shape, a curved surface structure, or a shape with irregularities, the adhesiveness of the thermally conductive sheet to the adherend is reduced and a gap is generated, causing a problem of a reduction in the thermally conductive properties.

The pressure-sensitive adhesive sheet that includes a pressure-sensitive adhesive layer having a bubble structure is often used for uses requiring the cohesive strength, the processability, and the repulsion resistance at the time of adhesion with respect to a curved surface or an uneven surface. As the pressure-sensitive adhesive sheet, a pressure-sensitive adhesive sheet in which glass microbubbles are dispersed in the entire pressure-sensitive adhesive layer has been proposed (the following Patent Document 2 and the following Patent Document 3). There has been a problem that although such a bubble-containing resin composition has an excellent adhesiveness to the adherend and an excellent followability to unevenness thereof, its thermally conductive properties are poor because of presence of bubbles in a resin composition.

Prior Art Document

Patent Document

    Patent Document 1: Japanese Unexamined Patent Publication No. H11-186473
    Patent Document 2: Japanese Patent Publication No. S57-17030
    Patent Document 3: Japanese Unexamined Patent Publication No. H7-48549

Summary of the Invention

Problems to be solved by the Invention

It is an object of the present invention to provide a bubble-containing thermally conductive resin composition layer having excellent thermally conductive properties, and an excellent adhesiveness to an adherend, an excellent followability to unevenness thereof, and excellent adhesive properties thereto. It is also an object of the present invention to provide a pressure-sensitive adhesive sheet having excellent thermally conductive properties, and an excellent adhesiveness to an adherend, an excellent followability to unevenness thereof, and excellent adhesive properties thereto using the bubble-containing thermally conductive resin composition layer as a pressure-sensitive adhesive layer or a substrate.

Solution to the Problems

The inventors of the present invention have earnestly considered in order to achieve the above-described objects; as a result, found the following fact; and completed the present invention. That is, by using a bubble-containing thermally conductive resin composition layer that is prepared from, as a base polymer, an acrylic polymer containing an alkyl (meth)acrylate as a monomer main component and contains bubbles and thermally conductive particles, the thermally conductive properties of a thermally conductive sheet and an excellent followability to uneven surface between the thermally conductive sheet and an adherend are simultaneously achieved and it is possible to form a pressure-sensitive adhesive layer and a substrate having excellent thermally conductive properties and excellent adhesive properties. That is, the present invention provides a bubble-containing thermally conductive resin composition layer containing at least: (a) an acrylic polymer containing an alkyl (meth)acrylate as a monomer main component; (b) thermally conductive particles; and (c) bubbles.

In the bubble-containing thermally conductive resin composition layer of the present invention, it is preferable that the thermal conductivity is 0.30 W/mK or more and it is preferable that the Asker C hardness is 50 or less.

In the bubble-containing thermally conductive resin composition layer of the present invention, it is preferable that the content of the bubbles is 5 to 50 volume % and it is preferable that in the thermally conductive particles, a particle having a first average particle size of 10 μm or more and a particle having a first average particle size of less than 10 μm are contained at a ratio of 1:10 to 10:1 (ratio by weight).

The present invention provides a method for producing a bubble-containing thermally conductive resin composition layer containing at least: (a) an acrylic polymer containing an alkyl (meth)acrylate as a monomer main component; (b) thermally conductive particles; and (c) bubbles, wherein the bubble-containing thermally conductive resin composition layer is formed by applying an activation energy beam to a bubble-containing thermally conductive resin composition containing at least: (a') a monomer mixture containing an alkyl (meth)acrylate as a monomer main component or a partial polymer thereof; (b) thermally conductive particles; and (c) bubbles.

The bubble-containing thermally conductive resin composition layer of the present invention is capable of being used as a pressure-sensitive adhesive layer or a substrate.

The present invention provides a pressure-sensitive adhesive sheet having a pressure-sensitive adhesive layer, wherein the pressure-sensitive adhesive layer is formed by a bubble-containing thermally conductive resin composition layer formed from the bubble-containing thermally conductive resin composition layer obtained by applying an activation energy beam to a bubble-containing thermally conductive resin composition containing at least: (a') a monomer mixture containing an alkyl (meth)acrylate as a monomer main component or a partial polymer thereof; (b) thermally conductive particles; and (c) bubbles.

The present invention provides a pressure-sensitive adhesive sheet having a substrate and a pressure-sensitive adhesive layer on at least one surface of the substrate, wherein the substrate is formed from a bubble-containing thermally conductive resin composition containing at least: (a) an acrylic polymer containing an alkyl (meth)acrylate as a monomer main component; (b) thermally conductive particles; and (c) bubbles.

Effect of the Invention

According to the bubble-containing thermally conductive resin composition layer of the present invention, the thermally conductive properties of the thermally conductive sheet and an excellent followability to uneven surface between the thermally conductive sheet and the adherend are simultaneously achieved and it is possible to provide the pressure-sensitive adhesive sheet that includes the pressure-sensitive adhesive layer and the substrate having excellent thermally conductive properties and an excellent adhesive force.

Brief Description of the Drawings

[FIG. 1] FIG. 1 shows schematic sectional views for partially illustrating an embodiment of a pressure-sensitive adhesive sheet of the present invention.
[FIG. 2] FIG. 2 shows schematic sectional views for partially illustrating an embodiment of a pressure-sensitive adhesive sheet of the present invention.
[FIG. 3] FIG. 3 shows explanatory views of a thermal property evaluation apparatus measuring the thermal conductivity and the thermal resistance in Examples.
[FIG. 4] FIG 4 shows an explanatory view of an adhesiveness test jig evaluating the adhesiveness in Examples.

Embodiment of the Invention

A bubble-containing thermally conductive resin composition layer of the present invention contains at least: (a) an acrylic polymer containing an alkyl (meth)acrylate as a monomer main component; (b) thermally conductive particles; and (c) bubbles. By containing the thermally conductive particles and the bubbles, thermally conductive properties and an excellent followability to uneven surface of an adherend can be simultaneously achieved.

In the bubble-containing thermally conductive resin composition layer of the present invention, preferably, it is desirable that the bubble-containing thermally conductive resin composition layer is formed by applying an activation energy beam to a bubble-containing thermally conductive resin composition containing at least: (a') a monomer mixture containing an alkyl (meth)acrylate as a monomer main component or a partial polymer thereof; (b) thermally conductive particles; and (c) bubbles and allowing the (a') a monomer mixture containing an alkyl (meth)acrylate as a monomer main component or a partial polymer thereof to be polymerized with the (a) an acrylic polymer in a state where the (c) bubbles are mixed.

(Acrylic Polymer)

As the (a) an acrylic polymer constituting the bubble-containing thermally conductive resin composition layer, an acrylic polymer obtained by polymerization of the (a') a monomer mixture containing an alkyl (meth)acrylate as a monomer main component or a partial polymer thereof is used. These acrylic polymers can be used alone or in combination of two or more.

An example of the alkyl (meth) acrylate constituting the acrylic polymer includes $C_{1-20}$ alkyl (meth) acrylate such as methyl (meth) acrylate, ethyl (meth) acrylate, propyl (meth) acrylate, isopropyl (meth) acrylate, butyl (meth) acrylate, isobutyl (meth) acrylate, s- butyl (meth) acrylate, t- butyl (meth) acrylate, pentyl (meth) acrylate, isopentyl (meth) acrylate, hexyl (meth) acrylate, heptyl (meth) acrylate, octyl (meth) acrylate, 2- ethylhexyl (meth) acrylate, isooctyl (meth) acrylate, nonyl (meth) acrylate, isononyl (meth) acrylate, decyl (meth) acrylate, isodecyl (meth) acrylate, undecyl (meth) acrylate, dodecyl (meth) acrylate, tridecyl (meth) acrylate, tetradecyl (meth) acrylate, pentadecyl (meth) acrylate, hexadecyl (meth) acrylate, heptadecyl (meth) acrylate, octadecyl (meth) acrylate, nonadecyl (meth) acrylate, and eicosyl (meth) acrylate.

When the bubble-containing thermally conductive resin composition layer is used as a pressure-sensitive adhesive layer, in particular, as the alkyl (meth)acrylate constituting the acrylic polymer, preferably, $C_{2-12}$ alkyl (meth) acrylate can be used, or more preferably, $C_{4-9}$ alkyl (meth)acrylate can be used.

When the bubble-containing thermally conductive resin composition layer is used as a substrate, as the alkyl (meth)acrylate constituting the acrylic polymer, preferably, $C_{1-14}$ alkyl (meth)acrylate can be used, or more preferably, $C_{2-12}$ alkyl (meth)acrylate can be used.

The above-described alkyl (meth)acrylate is used as a main component in a monomer constituting the acrylic polymer. It is important that the ratio of the alkyl (meth)acrylate with respect to the total amount of the monomer component for adjusting the acrylic polymer is, for example, 60 weight % or more (for example, 60 to 99 weight %), or preferably 80 weight % or more (for example, 80 to 98 weight %).

Examples of the (a) an acrylic polymer in the present invention may include various copolymerizable monomers, as monomer components, such as a polar group-containing monomer and a polyfunctional monomer. By using the copolymerizable monomer as the monomer component, for example, an adhesive force to an adherend can be improved or a cohesive force of the bubble-containing thermally conductive resin composition layer can be increased. These copolymerizable monomers can be used alone or in combination of two or more.

Examples of the polar group- containing monomer include a carboxyl group- containing monomer such as a (meth) acrylic acid, an itaconic acid, a maleic acid, a fumaric acid, a crotonic acid, and an isocrotonic acid or an anhydride thereof (a maleic anhydride or the like) ; a hydroxyl group- containing monomer such as hydroxyalkyl (meth) acrylate including hydroxyethyl (meth) acrylate, hydroxypropyl (meth) acrylate, and hydroxybutyl (meth) acrylate; an amide group-containing monomer such as acrylamide, methacrylamide, N, N- dimethyl (meth) acrylamide, N- methylol (meth) acrylamide, N- methoxymethyl (meth) acrylamide, N- butoxymethyl (meth) acrylamide, and hydroxyethyl acrylamide; an amino- group containing monomer such as aminoethyl (meth) acrylate, dimethylaminoethyl (meth) acrylate, and t-butylaminoethyl (meth) acrylate; a glycidyl group- containing monomer such as glycidyl (meth) acrylate and methylglycidyl (meth) acrylate; a cyano group- containing monomer such as acrylonitrile and methacrylonitrile; and a heterocycle-containing vinyl monomer such as N- vinyl- 2- pyrrolidone, (meth) acryloylmorpholine, N- vinylpyridine, N- vinylpiperidone, N- vinylpyrimidine, N- vinylpiperazine, N- vinylpyrrole, N- vinylimidazole, and N- vinyloxazole. As the polar group- containing monomer, in view of reactivity with the thermally conductive particles to be used, a polar group- containing monomer having a small interaction such as a polar group- containing monomer having a small reaction of the thermally conductive particles with the acrylic polymer due to an acid- base reaction is desirably used. As a preferable polar group-containing monomer, for example, when hydrated metal particles (aluminum hydroxide, magnesium hydroxide, or the like) are used in the thermally conductive particles, the particles have a basic functional group, so that a polar group-containing monomer, other than the carboxyl group- containing monomer having an acid functional group, is desirably used. Examples thereof include an amide group- containing monomer and an amino group- containing monomer.

The used amount of the polar group-containing monomer with respect to the total amount of the monomer component for adjusting the acrylic polymer is 30 weight % or less, for example, 1 to 30 weight %, or preferably 3 to 20 weight %. When the used amount of the polar group-containing monomer is above 30 weight %, for example, there may be a case where the cohesive force of an acrylic pressure-sensitive adhesive is excessively increased, so that the pressure-sensitive adhesive properties are reduced. When the used amount of the polar group-containing monomer is too small (for example, when the used amount thereof with respect to the total amount of the monomer component for adjusting the acrylic polymer is less than 1 weight %), the cohesive force of the acrylic pressure-sensitive adhesive is reduced, so that a high shearing force is not capable of being obtained.

Examples of the polyfunctional monomer include hexanediol (meth) acrylate, (poly) ethylene glycol di (meth) acrylate, (poly) propylene glycol di (meth) acrylate, neopentyl glycol di (meth) acrylate, pentaerythritol di (meth) acrylate, pentaerythritol tri (meth) acrylate, dipentaerythritol hexa (meth) acrylate, trimethylolpropane tri (meth) acrylate, tetramethylolmethane tri (meth) acrylate, allyl (meth) acrylate, vinyl (meth) acrylate, divinyl benzene, epoxy acrylate, polyester acrylate, urethane acrylate, dibutyl (meth) acrylate, and hexydyl (meth) acrylate.

The used amount of the polyfunctional monomer with respect to the total amount of the monomer component for adjusting the acrylic polymer is preferably 2 weight % or less, for example, 0.01 to 2 weight %, or more preferably 0.02 to 1 weight %. When the used amount of the polyfunctional monomer with respect to the total amount of the monomer component for adjusting the acrylic polymer is above 2 weight %, for example, there may be a case where the cohesive force of the acrylic pressure-sensitive adhesive is excessively increased, so that the pressure-sensitive adhesive properties are reduced. When the used amount of the polyfunctional monomer is too small, for example, when the used amount of the polyfunctional monomer with respect to the total amount of the monomer component for adjusting the acrylic polymer is less than 0.01 weight %, the cohesive force of the acrylic pressure-sensitive adhesive may be reduced.

Examples of the copolymerizable monomer, other than the polar group- containing monomer and the polyfunctional monomer, include (meth) acrylate ester having an alicyclic hydrocarbon group such as cyclopentyl (meth) acrylate, cyclohexyl (meth) acrylate, isoboronyl (meth) acrylate, methylcyclohexyl (meth) acrylate, trimethylcyclohexyl (meth) acrylate, norbornyl (meth) acrylate, norbornylmethyl (meth) acrylate, cyanonorbornyl (meth) acrylate, phenylnorbornyl (meth) methacrylate, bornyl (meth) acrylate, menthyl (meth) acrylate, fenchyl (meth) acrylate, adamantyl (meth) acrylate, dimethyladamantyl (meth) acrylate, tricyclo [5.2.1.0$^{2,6}$] deca- 8- yl (meth) acrylate, tricyclo [5.2.1.0$^{2,6}$] deca- 4- methyl (meth) acrylate, and cyclodecyl (meth) acrylate; vinyl esters such as vinyl acetate and vinyl propionate; an aromatic vinyl compound such as styrene and vinyl toluene; olefins or dienes such as ethylene, butadiene, isoprene, and isobutylene; vinyl ethers such as vinyl alkyl ether; vinyl chloride; an alkoxyalkyl (meth) acrylate- based monomer such as methoxyethyl (meth) acrylate and ethoxyethyl (meth) acrylate; a sulfonic acid group- containing monomer such as sodium vinyl sulfonate; a phosphoric acid group- containing monomer such as 2- hydroxyethylacryloylphosphate; an imide group- containing monomer such as cyclohexylmaleimide and isopropylmaleimide; an isocyanate group- containing monomer such as 2- methacryloyloxyethylisocyanate; fluorine atom- containing (meth) acrylate; and silicon atom- containing (meth) acrylate.

In the present invention, in the adjustment of the acrylic polymer as the base polymer (that is, in the formation of the bubble-containing thermally conductive resin composition layer such as a bubble-containing pressure-sensitive adhesive layer and a bubble-containing substrate), a curing reaction by heat or an activation energy beam using a polymerization initiator such as a thermal polymerization initiator and a photopolymerization initiator (a photoinitiator) can be used. That is, the polymerization initiator such as the thermal polymerization initiator and the photopolymerization initiator may be contained in the bubble-containing thermally conductive resin composition that forms the bubble-containing thermally conductive resin composition layer. Consequently, the bubble-containing thermally conductive resin composition is capable of being cured by the heat or the activation energy beam. In this way, when the polymerization initiator (the thermal polymerization initiator, the photopolymerization initiator, or the like) is contained, the curing by the heat or the activation energy beam is possible and thus, the bubble-containing thermally conductive resin composition layer is formed by curing in a state where bubbles are mixed, so that the bubble-containing thermally conductive resin layer having a structure of stably containing the bubbles can be easily formed.

As the polymerization initiator, in view of advantages of being capable of shortening a polymerization duration, preferably, a photopolymerization initiator can be used. That is, preferably, the bubble-containing pressure-sensitive adhesive layer having a stable bubble structure is formed using the polymerization in which the activation energy beam is used. These polymerization initiators can be used alone or in combination of two or more.

The polymerization initiator is not particularly limited and examples thereof can include a benzoin ether-based photopolymerization initiator, an acetophenone-based photopolymerization initiator, an $\alpha$-ketol-based photopolymerization initiator, an aromatic sulfonyl chloride-based photopolymerization initiator, a photo active oxime-based photopolymerization initiator, a benzoin-based photopolymerization initiator, a benzyl-based photopolymerization initiator, a benzophenone-based photopolymerization initiator, a ketal-based photopolymerization initiator, and a thioxanthone-based photopolymerization initiator.

To be specific, examples of the benzoin ether- based photopolymerization initiator include benzoin methyl ether, benzoin ethyl ether, benzoin propyl ether, benzoin isopropyl ether, benzoin isobutyl ether, 2, 2- dimethoxy- 1, 2- diphenylethane- 1- one, and anisole methyl ether. Examples of the acetophenone- based photopolymerization initiator include 2, 2- diethoxyacetophenone, 2, 2- dimethoxy- 2- phenylacetophenone, 1- hydroxycyclohexyl phenyl ketone, 4- phenoxydichloroacetophenone, and 4- (t- butyl) dichloroacetophenone. Examples of the $\alpha$- ketol- based photopolymerization initiator include 2- methyl- 2- hydroxypropiophenone and 1- [4- (2- hydroxyethyl) phenyl]- 2- methylpropane- 1- one. An example of the aromatic sulfonyl chloride- based photopolymerization initiator includes 2- naphthalenesulfonylchloride. An example of the photo active oxime- based photopolymerization initiator includes 1- phenyl- 1, 1- propanedione- 2- (o- ethoxycarbonyl)- oxime.

An example of the benzoin- based photopolymerization initiator includes benzoin. An example of the benzyl- based photopolymerization initiator includes benzyl. Examples of the benzophenone- based photopolymerization initiator include benzophenone, benzoylbenzoic acid, 3, 3'- dimethyl- 4- methoxybenzophenone, polyvinylbenzophenone, and $\alpha$- hydroxycyclohexyl phenyl ketone. Examples of the ketal- based photopolymerization initiator include thioxanthone, 2- chlorothioxanthone, 2- methylthioxanthone, 2, 4- dimethylthioxanthone, isopropylthioxanthone, 2, 4- diisopropylthioxanthone, and decylthioxanthone.

The used amount of the photopolymerization initiator is not particularly limited. The used amount thereof can be selected within a range of, for example, 0.01 to 5 parts by weight, or preferably 0.05 to 3 parts by weight with respect to 100 parts by weight of the total monomer component for forming the base polymer in the bubble-containing thermally conductive resin composition [in particular, the total monomer component for forming the acrylic polymer containing an alkyl (meth)acrylate as a monomer main component].

In the activation of the photopolymerization initiator, it is important to apply the activation energy beam to a bubble-containing viscoelastic composition. Examples of the activation energy beam include an ionizing radiation such as $\alpha$-ray, $\beta$-ray, $\gamma$-ray, neutron ray, and electron beam and ultraviolet ray. Ultraviolet ray, in particular, is preferably used. The irradiation energy, the irradiation duration, and the like of the activation energy beam are not particularly limited as long as the photopolymerization initiator can be activated to generate a reaction of the monomer component.

Examples of the thermal polymerization initiator include an azo- based polymerization initiator [for example, 2, 2'- azobisisobutyronitrile, 2, 2'- azobis- 2- methylbutyronitrile, 2, 2'- azobis (2- methylpropionic acid) dimethyl, 4, 4'- azobis- 4- cyanovalerianic acid, azobis isovaleronitrile, 2, 2'- azobis (2- amidinopropane) dihydrochloride, 2, 2'- azobis [2- (5- methyl- 2- imidazoline- 2- yl) propane] dihydrochloride, 2, 2'- azobis (2- methylpropioneamidine) disulfate, 2, 2'- azobis (N, N'- dimethyleneisobutylamidine) hydrochloride, and the like] ; a peroxide- based polymerization initiator (for example, dibenzoyl peroxide, t- butyl permaleate, and the like) ; and a redox- based polymerization initiator. The used amount of the thermal polymerization initiator is not particularly limited as long as it is within a range that can be conventionally used as a polymerization initiator.

(Thermally Conductive Particles)

Examples of the (b) thermally conductive particles constituting the bubble-containing thermally conductive resin composition layer of the present invention include ceramic particles or metal particles that have high thermally conductive properties. The (b) thermally conductive particles are particles that improve the thermally conductive properties of the resin composition layer by filling the resin composition layer as a filler. To be specific, example of the (b) thermally conductive particles can include particles of boron nitride, aluminum nitride, silicon nitride, gallium nitride, aluminum hydroxide, magnesium hydroxide, silicon carbonate, silicon dioxide, aluminum oxide, magnesium oxide, titanium oxide, zinc oxide, tin oxide, copper oxide, nickel oxide, antimony doped tin oxide, calcium carbonate, barium titanate, potassium titanate, copper, silver, gold, nickel, aluminum, platinum, carbon black, carbon tube (carbon nanotube), carbon fiber, and diamond. Of the thermally conductive particles, for the reasons of having high thermally conductive properties and having electrically insulating properties, preferably, boron nitride, aluminum hydroxide, and aluminum oxide are used, or particularly preferably, aluminum hydroxide is used. These thermally conductive particles may be used alone or in combination of two or more.

The shape of each of the thermally conductive particles used in the present invention is not particularly limited and examples of the shape thereof may include a bulk shape, a needle shape, a plate shape, or a layer shape. Examples of the bulk shape include a sphere shape, a rectangular parallelepiped shape, and a pulverized shape or a deformed shape thereof.

The size of each of the thermally conductive particles in the present invention is, in the case of the thermally conductive particles in a bulk shape (a sphere shape), as the first average particle size, 0.1 to 1000 $\mu$m, preferably 1 to 100 $\mu$m, or more preferably 5 to 45 $\mu$m. When the first average particle size thereof is above 1000 $\mu$m, there is a disadvantage that the size of the thermally conductive particles exceeds the thickness of the resin composition layer to cause the occurrence of unevenness in the thickness. The first average particle size is a value based on volume obtained by a particle size distribution measurement method in a laser scattering method. To be specific, the first average particle size is obtained by measuring a D50 value with a laser scattering particle size analyzer.

In the case of the thermally conductive particles in a needle shape or a plate shape, the maximum length of each of the thermally conductive particles is 0.1 to 1000 $\mu$m, preferably 1 to 100 $\mu$m, or more preferably 5 to 45 $\mu$m. When the maximum length thereof is above 1000 $\mu$m, there is a disadvantage that the thermally conductive particles easily aggregate with each other and the handling thereof becomes difficult. In addition, the aspect ratio (in the case of a needle-shaped crystal, expressed by the length of the long axis/the length of the short axis or the length of the long axis/the thickness and in the case of a plate-shaped crystal, expressed by the diagonal length/the thickness or the length of the long side/the thickness) thereof is 1 to 10000, or preferably 10 to 1000.

In the present invention, preferably, the thermally conductive particles having a different particle size are used in combination of two or more. When the thermally conductive particles having a different particle size are used in combination of two or more, the particle size is not particularly limited. Preferably, for example, the particles having a large particle size of 10 $\mu$m or more and a small particle size of less than 10 $\mu$m are used in combination. By using the thermally conductive particles having a different particle size in combination in this way, there is an effect that the thermally conductive particles further closely and tightly fill the bubble-containing thermally conductive resin composition layer and a thermally conductive path by the thermally conductive particles are easily formed, so that the thermally conductive properties are improved. In order to obtain the effect, for example, desirably, the mixing ratio (ratio by weight) of a large particle having the first average particle size or the maximum length of 10 $\mu$m or more to a small particle having the first average particle size or the maximum length of less than 10 $\mu$m is 1:10 to 10:1, preferably 1:5 to 5:1, or more preferably 1:2 to 2:1.

In the present invention, a commercially available product can be used as the thermally conductive particles. Examples of the commercially available product can include as the boron nitride, "HP-40" manufactured by MIZUSHIMA FERROALLOY CO., LTD. and "PT620" manufactured by Momentive Performance Materials Inc.; as the aluminum hydroxide, "HIGILITE H-10", "HIGILITE H-32", and "HIGILITE H-42" manufactured by SHOWA DENKO K.K.; as the aluminum oxide, "AS-50" manufactured by SHOWA DENKO K.K.; as the magnesium hydroxide, "KISUMA 5A" manufactured by Kyowa Chemical Industry Co., Ltd.; as the antimony doped tin oxide, "SN-100S", "SN-100P", and "SN-100D (an aqueous dispersion product)" manufactured by ISHIHARA SANGYO KAISHA, LTD.; as the titanium oxide, the "TTO series" manufactured by ISHIHARA SANGYO KAISHA, LTD.; and as the zinc oxide, "SnO-310", "SnO-350", and "SnO-410" manufactured by SUMITOMO OSAKA CEMENT Co., Ltd.

The ratio (the solid content) of the (b) thermally conductive particles constituting the bubble-containing thermally conductive resin composition layer of the present invention is not particularly limited. In order to allow the thermal conductivity to be 0.25 W/mK or more and obtain sufficient adhesive properties and followability to unevenness, preferably, the ratio thereof with respect to 100 parts by weight of the acrylic polymer in the bubble-containing thermally conductive resin composition is preferably 10 to 1000 parts by weight, more preferably 50 to 500 parts by weight, or further more preferably 100 to 400 parts by weight. When the ratio of the thermally conductive particles is less than 10 parts by weight, the sufficient thermally conductive properties are not capable of being imparted and when the ratio thereof is above 1000 parts by weight, there may be a case where flexibility is reduced, and a pressure-sensitive adhesive force and the adhesiveness to the adherend are reduced.

In order to stably disperse the thermally conductive particles without being aggregated, preferably, a dispersant is used in the bubble-containing thermally conductive resin composition layer of the present invention. The dispersant is not particularly limited and preferably, phosphate ester is used. Examples of the phosphate ester include phosphoric monoester of polyoxyethylene alkyl (or alkylallyl) ether or polyoxyethylene alkyl aryl ether; phosphoric diester of polyoxyethylene alkyl ether or polyoxyethylene alkyl aryl ether; and phosphoric triester or a derivative thereof. These phosphate ester-based dispersants may be used alone or in combination of two or more. Of these, in view of temporal stability of the thermally conductive particles, preferably, phosphoric monoester and phosphoric diester of polyoxyethylene alkyl ether or polyoxyethylene alkyl aryl ether are used. Examples thereof include the "PLYSURF" series such as A212E, A210G, A212C, and A215C manufactured by DAI-ICHI KOGYO SEIYAKU CO., LTD. and the "PHOSPHANOL" such as RE610, RS710, and RS610 manufactured by TOHO Chemical Industry Co., Ltd. The mixing amount of the dispersant is not particularly limited and is, for example, 0.01 to 10 parts by weight, preferably 0.05 to 5 parts by weight, or more preferably 0.1 to 3 parts by weight with respect to 100 parts by weight of the acrylic polymer.

(Bubbles)

The bubble-containing thermally conductive resin composition layer of the present invention contains the (c) bubbles. The content of the bubbles can be appropriately selected as long as it does not damage the thermally conductive properties or the like of the bubble-containing thermally conductive resin composition layer and is usually 5 to 50 volume %, preferably 10 to 40 volume %, or more preferably 12 to 30 volume % with respect to the total volume of the bubble-containing thermally conductive resin composition layer. When the amount of bubbles is less than 5 volume %, the adhesiveness to the adherend and the followability to unevenness thereof are often poor. When the amount of bubbles is above 50 volume %, there may be a case where the heat insulating effect by the bubbles becomes too large, so that the thermally conductive properties are reduced; the bubbles that penetrate through a sheet are formed, so that the adhesive properties become poor; or the bubble-containing thermally conductive resin composition layer becomes too soft, so that the shearing force becomes poor.

Desirably, the bubbles to be mixed in the bubble- containing thermally conductive resin composition layer are basically the bubbles of independent bubble type. However, the bubbles of independent bubble type and those of continuous bubble type may be present in mixture.

The bubbles usually have sphere shapes. Alternatively, the bubbles may have distorted sphere shapes. The average bubble size (the diameter) of each of the bubbles is not particularly limited and can be selected within a range of, for example, 1 to 1000 $\mu$m, preferably 10 to 500 $\mu$m, or more preferably 30 to 300 $\mu$m.

A gas component contained in the bubbles (a gas component that forms the bubbles; may be referred to as a "bubble-forming gas") is not particularly limited and examples thereof can include an inert gas such as nitrogen, carbon dioxide, and argon or various other gas components such as air. It is important to use a bubble-forming gas that does not inhibit a reaction when the reaction such as a polymerization reaction is performed after mixing the bubble-forming gas. As the bubble-forming gas, in view of not inhibiting a reaction and cost, preferably, nitrogen is used.

A method for mixing the bubbles is not particularly limited. Preferably, it is desirable that a bubble-containing thermally conductive resin composition is formed by mixing the (c) bubbles into a precursor composition of the bubble-containing thermally conductive resin composition (hereinafter, may be referred to as a "precursor composition") containing at least the (a') a monomer mixture containing an alkyl (meth)acrylate as a monomer main component or a partial polymer thereof and the (b) thermally conductive particles and then, an activation energy beam is applied to the obtained bubble-containing thermally conductive resin composition to form a bubble-containing thermally conductive resin composition layer. As a method for mixing the bubbles, a known bubble-mixing method can be used. An example of a device includes a device in which on a disk having a through hole in the center thereof, a stator with many small teeth and a rotor that is opposed to the stator with teeth and has the same small teeth as those of the stator on the disk. The precursor composition is introduced between the teeth on the stator and the teeth on the rotor in the device and the gas component (the bubble-forming gas) for forming the bubbles via the through hole is introduced into the precursor composition, while the rotor is allowed to run at high speed, so that the bubble-containing thermally conductive resin composition in which the bubble-forming gas is finely dispersed to be mixed in the precursor composition can be obtained.

In order to suppress or prevent integration of the bubbles, preferably, the steps from mixing of the bubbles to forming of the bubble-containing thermally conductive resin composition layer are continuously performed as a series of steps. That is, after preparing the bubble-containing thermally conductive resin composition by allowing the bubbles to be mixed as described above, subsequently, the bubble-containing thermally conductive resin composition layer is preferably formed using the bubble-containing thermally conductive resin composition by an appropriate forming method.

(Fluorine-Based Surfactant)

In the bubble-containing thermally conductive resin composition of the present invention, a fluorine-based surfactant can be used. By using the fluorine-based surfactant, degree of adhesiveness and frictional resistance of the thermally conductive particles and the base polymer in the bubble-containing thermally conductive layer are reduced and stress dispersibility is developed. Thus, when the pressure-sensitive adhesive layer is formed using the bubble-containing thermally conductive resin composition of the present invention, high adhesive properties can be obtained. In addition to the reduction effects such as the above-described frictional resistance by having a fluorine-based hydrocarbon group, effects of increasing bubble mixing property and bubble stability can be also obtained.

An example of the fluorine- based surfactant includes a fluorine- based surfactant having, in a molecule, an

oxyC$_{2-3}$ alkylene group and a fluorine- based hydrocarbon group. The oxyC$_{2-3}$ alkylene group is represented by a formula:- R- O- (R represents a straight chain or branched chain alkylene group having 2 or 3 carbon atoms). The fluorine- based surfactant is not particularly limited as long as it has an oxyC$_{2-3}$ alkylene group and a fluorine- based hydrocarbon group. In view of dispersibility with respect to the base polymer, preferably, a non- ionic surfactant is used. The fluorine- based surfactant may have, in a molecule, any one of an oxyethylene group (- CH$_2$CH$_2$O- ) and an oxypropylene group [- CH$_2$CH (CH$_3$) O- ] or two or more thereof. The fluorine- based surfactants can be used alone or in combination of two or more.

The fluorine-based hydrocarbon group is not particularly limited and preferably, a perfluoro group is used. The perfluoro group may be monovalent or may be polyvalent such as divalent or higher valent. The fluorine-based hydrocarbon group may have a double bond or a triple bond and may have a straight chain, a branched chain, or a cyclic structure. The number of carbon atoms of the fluorine-based hydrocarbon group is not particularly limited and is 1 or 2 or more, preferably 3 to 30, or more preferably 4 to 20. One or two or more fluorine-based hydrocarbon group(s) is/are introduced into a molecule of the surfactant. Examples of a form of the oxyC$_{2-3}$ alkylene group may include any one of an alcohol in which a hydrogen atom is bonded to an oxygen atom at the end, ether in which another hydrocarbon group is bonded to an oxygen atom at the end, and ester in which another hydrocarbon group is bonded to an oxygen atom via a carbonyl group. An example of a form of the oxyC$_{2-3}$ alkylene group may also include a form having the structure in a part of the cyclic structure such as cyclic ethers and lactones.

The structure of the fluorine-based surfactant is not particularly limited and for example, a copolymer that contains, as monomer components, a monomer having an oxyC$_{2-3}$ alkylene group and a monomer having a fluorine-based hydrocarbon group can be preferably used. As a form of the copolymer, various forms such as a block copolymer and a graft copolymer are used. Any one of these is preferably used.

Examples of the block copolymer (a copolymer having an oxyC$_{2-3}$ alkylene group and a fluorine-based hydrocarbon group in the main chain) include polyoxyethylene perfluoroalkyl ether, polyoxyethylene perfluoroalkylate, polyoxypropylene perfluoroalkyl ether, polyoxyisopropylene perfluoroalkyl ether, polyoxyethylene sorbitan perfluoroalkylate, polyoxyethylene polyoxypropylene block copolymer perfluoroalkylate, and polyoxyethylene glycol perfluoroalkylate.

An example of the graft copolymer (a copolymer having an oxyC$_{2-3}$ alkylene group and a fluorine- based hydrocarbon group in a side chain) includes a copolymer containing, as monomer components, at least a vinyl compound having a polyoxyalkylene group and a vinyl compound having a fluorine- based hydrocarbon group. Preferably, an acrylic copolymer, in particular, is used. An example of the vinyl compound having a polyoxyalkylene group includes polyoxyalkylene (meth) acrylate such as polyoxyethylene (meth) acrylate, polyoxypropylene (meth) acrylate, and polyoxyethylene polyoxypropylene (meth) acrylate. Examples of the vinyl compound having a fluorine- based hydrocarbon group include perfluoroalkyl (meth) acrylate such as perfluorobutyl (meth) acrylate, perfluoroisobutyl (meth) acrylate, and perfluoropentyl (meth) acrylate and (meth) acrylate ester having a fluorine- based hydrocarbon group.

The fluorine-based surfactant may have a structure such as an alicyclic hydrocarbon group or an aromatic hydrocarbon group in a molecule, other than the above-described structure. The fluorine-based surfactant may have various functional groups such as a carboxyl group, a sulfonic acid group, a cyano group, an amide group, and an amino group as long as it does not inhibit the dispersibility with respect to the base polymer. When the fluorine-based surfactant is a vinyl copolymer, for example, a monomer component that is copolymerizable with a vinyl compound having a polyoxyalkylene group and a vinyl compound having a fluorine-based hydrocarbon group may be used. These monomers can be used alone or in combination of two or more.

Preferably, examples of the above- described copolymerizable monomer component include C$_{1-20}$ alkyl (meth) acrylate such as undecyl (meth) acrylate and dodecyl (meth) acrylate; (meth) acrylate ester having an alicyclic hydrocarbon group such as cyclopentyl (meth) acrylate; and (meth) acrylate ester having an aromatic hydrocarbon group such as phenyl (meth) acrylate. Other than those, examples thereof also include a carboxyl group- containing monomer such as a maleic acid and a crotonic acid; a sulfonic acid group- containing monomer such as sodium vinylsulfonate; an aromatic vinyl compound such as styrene and vinyltoluene; olefins or dienes such as ethylene and butadiene; vinyl ethers such as vinyl alkyl ether; an amide group- containing monomer such as acrylamide; an amino group- containing monomer such as (meth) acryloylmorpholine; a glycidyl group- containing monomer such as methylglycidyl (meth) acrylate; and an isocyanate group- containing monomer such as 2- methacryloyloxyethyl isocyanate. Furthermore, examples thereof may include a polyfunctional copolymerizable monomer (a polyfunctional monomer) such as dipentaerythritol hexa (meth) acrylate and divinylbenzene.

The molecular weight of the fluorine-based surfactant is not particularly limited and when the weight average molecular weight is less than 20000 (for example, 500 or more and less than 20000), the effects of reducing the adhesiveness and the frictional resistance between the base polymer in the viscoelastic composition and the thermally conductive particles are high. In addition, the fluorine-based surfactants each having a weight average molecular weight of 20000 or more (for example, 20000 to 100000, preferably 22000 to 80000, or more preferably 24000 to 60000) are used in combination, the bubble mixing property and the bubble stability of the mixed bubbles are increased.

Specific examples of the fluorine-based surfactant having an oxyC$_{2-3}$ alkylene group and a fluorine-based hydrocarbon group and having a weight average molecular weight of less than 20000 include trade name: "FTERGENT 251" (manufactured by NEOS COMPANY LIMITED), trade name: "FTX-218" (manufactured by NEOS COMPANY LIMITED), trade name: "MEGAFAC F-477" (manufactured by DIC Corporation), trade name: "MEGAFAC F-470" (manufactured by DIC Corporation), trade name: "SURFLON S-381" (manufactured by AGC SEIMI CHEMICAL CO., LTD.), trade name: "SURFLON S-383" (manufactured by AGC SEIMI CHEMICAL CO., LTD.), trade name: "SURFLON S-393" (manufactured by AGC SEIMI CHEMICAL CO., LTD.), trade name: "SURFLON KH-20" (manufactured by AGC SEIMI CHEMICAL CO., LTD.), and trade name: "SURFLON KH-40" (manufactured by AGC SEIMI CHEMICAL CO., LTD.). Specific examples of the fluorine-based surfactant having an oxy$C_{2-3}$ alkylene group and a fluorine-based hydrocarbon group and having a weight average molecular weight of 20000 or more include trade name: "EFTOP EF-352" (manufactured by JEMCO Inc.), trade name: "EFTOP EF-801" (manufactured by JEMCO Inc.), and trade name: "Unidyne TG-656" (manufactured by DAIKIN INDUSTRIES, ltd.). Any one of these can be preferably used in the present invention.

The used amount (the solid content) of the fluorine-based surfactant is not particularly limited and can be selected within a range of, for example, 0.01 to 5 parts by weight, preferably 0.02 to 3 parts by weight, or more preferably 0.03 to 1 parts by weight with respect to 100 parts by weight of the total monomer component for forming the base polymer in the bubble-containing thermally conductive resin composition layer. When the used amount thereof is less than 0.01 parts by weight, the effect with respect to the adhesive properties is not capable of being obtained and when the used amount thereof is above 5 parts by weight, the adhesive properties are reduced.

In the present invention, the dispersant, which stably disperses the above-described thermally conductive particles, and the fluorine-based surfactant, which reduces the degree of adhesiveness and the frictional resistance between the thermally conductive particles and the base polymer in the bubble-containing thermally conductive layer and develops the stress dispersibility, can be used in combination. By using the dispersant and the fluorine-based surfactant in combination, the thermally conductive particles are capable of being stably present without aggregating in the bubble-containing thermally conductive resin layer by a smaller amount than when the dispersant or the fluorine-based surfactant is used alone, leading to the improvement of the thermally conductive properties. The stress dispersibility of the bubble-containing thermally conductive layer is improved and further higher adhesive properties can be expected. When the two additives are used in combination, the mixing ratio thereof is not particularly limited and desirably, the additives are used at a ratio (ratio by weight) of the dispersant to the fluorine-based surfactant of 1:20 to 20:1, preferably 1:10 to 10:1, or more preferably 1:5 to 5:1.

In the present invention, in order to stably mix the bubbles to be present in the bubble-containing thermally conductive resin composition, preferably, the bubbles are blended to be mixed as the last component in the bubble-containing thermally conductive resin composition and in particular, the viscosity of the precursor composition, which is the bubble-containing thermally conductive resin composition before the bubbles are mixed, is preferably increased. The viscosity of the precursor composition is not particularly limited as long as it is the viscosity that is capable of stably retaining the mixed bubbles. For example, desirably, the viscosity measured by using a BH viscometer as a viscometer under the conditions of a rotor: a No. 5 rotor, the number of rotations: 10 rpm, and a measurement temperature: 30°C is 5 to 50 Pa·s (preferably, 10 to 40 Pa·s). When the viscosity (a BH viscometer, a No. 5 rotor, 10 rpm, 30°C) of the bubble-containing thermally conductive precursor is less than 5 Pa·s, there may be a case where the viscosity is too low and the mixed bubbles are easily integrated to be released outside the system. On the other hand, when the viscosity thereof is above 50 Pa·s, it becomes difficult to form the bubble-containing thermally conductive layer because of too high viscosity.

The viscosity of the precursor composition can be adjusted by, for example, a method in which various polymer components such as an acrylic rubber and a thickening additive are blended or a method in which a monomer component for forming a base polymer [for example, a monomer component such as (meth)acrylate ester for forming an acrylic polymer or the like] is partially polymerized to serve as a partial polymer. To be specific, for example, a monomer component for forming a base polymer [for example, a monomer component such as (meth)acrylate ester for forming an acrylic polymer or the like] and a polymerization initiator (for example, a photopolymerization initiator or the like) are mixed to prepare a monomer mixture. A polymerization reaction in accordance with the type of the polymerization initiator is performed with respect to the monomer mixture and a composition (a syrup) containing a partial polymer in which a part of the monomer component only is polymerized is prepared. Thereafter, the thermally conductive particles and, if necessary, the dispersant, the fluorine-based surfactant, and various additives to be described later are blended into the syrup, so that the precursor composition having an appropriate viscosity at which the bubbles are capable of being stably contained can be prepared. By introducing the bubbles into the precursor composition to be mixed, the bubble-containing thermally conductive resin composition that stably contains the bubbles can be obtained. In the preparation of the syrup, the fluorine-based surfactant and the thermally conductive particles may be appropriately blended in the monomer mixture in advance.

(Other Components)

In addition to the above-described components (the acrylic polymer, the thermally conductive particles, the bubbles, and the like), an appropriate additive may be contained in the bubble-containing thermally conductive resin composition layer of the present invention in accordance with the use of the bubble-containing thermally conductive resin composition layer. When the bubble-containing thermally conductive resin composition layer is a pressure-sensitive adhesive layer, an appropriate additive such as a cross-linking agent (for example, a polyisocyanate cross-linking agent, a silicone cross-linking agent, an epoxy cross-linking agent, an alkyletherified melamine cross-linking agent, or the like), a tackifier resin (for example, a solid, semi-solid, or liquid tackifier resin at normal temperature consisting of a rosin derivative resin, a polyterpene resin, a petroleum resin, an oil-soluble phenol resin, or the like), a plasticizer, a filler, an oxidation inhibitor, and a colorant (a pigment, a dye, or the like) may be contained therein.

For the purpose of further improving the adhesive force, the durability, and the affinity between the thermally conductive particles and the acrylic polymer, a silane coupling agent can be used in the bubble-containing thermally conductive resin composition layer of the present invention. As the silane coupling agent, a known silane coupling agent can be appropriately used without any particular limitation.

To be specific, examples of the silane coupling agent include an epoxy group- containing silane coupling agent such as 3- glycidoxypropyltrimethoxysilane, 3- glycidoxypropyltriethoxysilane, 3- glycidoxypropylmethyldiethoxysilane, and 2- (3, 4- epoxycyclohexyl) ethyltrimethoxysilane; an amino group- containing silane coupling agent such as 3- aminopropyltrimethoxysilane, N- 2- (aminoethyl)- 3- aminopropylmethyldimethoxysilane, and 3- triethoxysilyl- N- (1, 3- dimethyl- butylidene) propylamine; a (meth) acrylic group- containing silane coupling agent such as 3- acryloxypropyltrimethoxysilane and 3- methacryloxypropyltriethoxysilane; and an isocyanate group- containing silane coupling agent such as 3- isocyanatepropyltriethoxysilane. These silane coupling agents may be used alone or in combination of two or more.

The content of the above-described silane coupling agent with respect to 100 parts by weight of the above-described acrylic polymer is preferably 0.01 to 10 parts by weight, more preferably 0.02 to 5 parts by weight, or further more preferably 0.05 to 2 parts by weight. By using the above-described silane coupling agent within the above-described range, the cohesive force and the durability can be further surely improved. On the other hand, when the content thereof is less than 0.01 parts by weight, there may be a case where the surfaces of the thermally conductive particles contained in the bubble-containing thermally conductive resin composition layer cannot be covered and the affinity is not improved. On the other hand, when the content thereof is above 10 parts by weight, the thermally conductive properties may be reduced.

When the bubble-containing thermally conductive resin composition layer is formed using the photopolymerization initiator, a pigment (a color pigment) can be used so as to color the bubble-containing thermally conductive resin composition layer in an amount that does not inhibit photopolymerization. When black is desired as the coloring of the bubble-containing thermally conductive resin composition layer, for example, carbon black can be used. Desirably, the used amount of the carbon black as the color pigment is, in view of degree of coloring and not inhibiting a photopolymerization reaction, selected within a range of 0.15 parts by weight or less, for example, 0.001 to 0.15 parts by weight, or preferably 0.02 to 0.1 parts by weight with respect to 100 parts by weight of the base polymer in the bubble-containing thermally conductive resin composition.

(Pressure-Sensitive Adhesive Sheet)

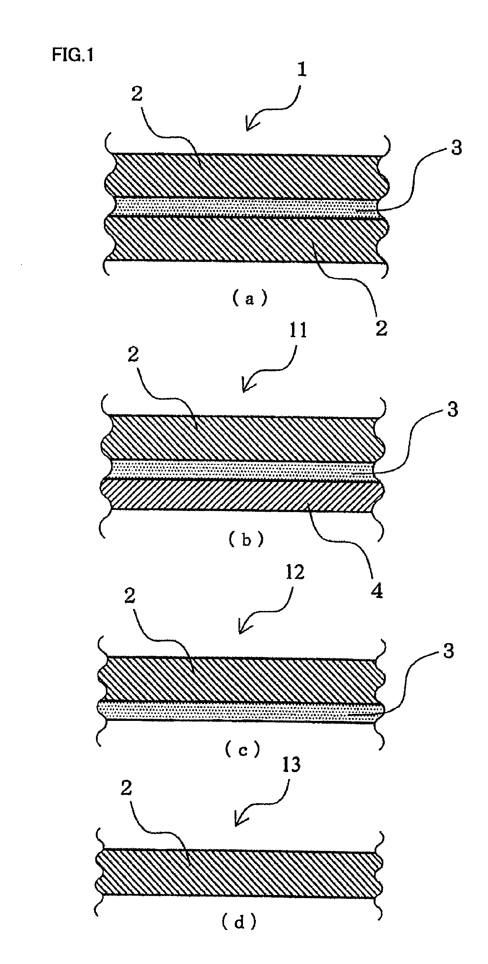

The pressure-sensitive adhesive sheet of the present invention includes a bubble-containing thermally conductive pressures-sensitive adhesive layer and/or a bubble-containing thermally conductive substrate that are/is formed from the above-described bubble-containing thermally conductive resin composition. The pressure-sensitive adhesive sheet may have a form of a double-sided pressure-sensitive adhesive sheet in which both surfaces serve as adhesive surfaces (pressure-sensitive adhesion surfaces) or may have a form of a pressure-sensitive adhesive sheet in which one surface only serves as an adhesive surface. To be specific, when the bubble-containing thermally conductive resin composition layer that is formed from the bubble-containing thermally conductive resin composition is the bubble-containing thermally conductive pressure-sensitive adhesive layer, examples of the pressure-sensitive adhesive sheet include, for example, as shown in FIGS. 1 (a) or (b), (1) a double-sided pressure-sensitive adhesive sheet with a substrate having a bubble-containing thermally conductive pressure-sensitive adhesive layer (a double-sided pressure-sensitive adhesion sheet with a substrate having a bubble-containing thermally conductive pressure-sensitive adhesive layer) that has a structure in which a bubble-containing thermally conductive pressure-sensitive adhesive layer is formed on at least one surface of a substrate and pressure-sensitive adhesion surfaces are formed on both surfaces of the substrate; as shown in FIG. 1 (c), (2) a pressure-sensitive adhesive sheet with a substrate having a bubble-containing thermally conductive pressure-sensitive adhesive layer (a one-sided pressure-sensitive adhesion sheet with a substrate having a bubble-containing thermally conductive pressure-sensitive adhesive layer) that has a structure in which a bubble-containing thermally conductive pressure-sensitive adhesive layer is formed on one surface of a substrate; and, as shown in FIG. 1 (d), (3) a substrate-less double-sided pressure-sensitive adhesive sheet having a bubble-containing thermally conductive pressure-sensitive adhesive layer (a substrate-less double-sided pressure-sensitive adhesive sheet having a bubble-containing thermally conductive pressure-sensitive adhesive layer) that has a structure of being formed of a bubble-containing thermally conductive pressure-sensitive adhesive layer only.

FIG. 1 shows schematic sectional views for partially illustrating an embodiment of a pressure-sensitive adhesive sheet of the present invention. In FIG. 1, 1, 11, 12, and 13 represent a pressure-sensitive adhesive sheet having a bubble-containing thermally conductive pressure-sensitive adhesive layer, respectively; 2 represents a bubble-containing thermally conductive pressure-sensitive adhesive layer; 3 represents a substrate (a non-bubble-containing thermally conductive substrate); and 4 represents a pressure-sensitive adhesive layer (a non-bubble-containing thermally conductive pressure-sensitive adhesive layer). The pressure-sensitive adhesive sheet having the bubble-containing thermally conductive pressure-sensitive adhesive layer shown in FIG. 1 (a) has a structure in which bubble-containing thermally conductive pressure-sensitive adhesive layers 2 are formed on both surfaces of a substrate 3. A pressure-sensitive adhesive sheet 11 having the bubble-containing thermally conductive pressure-sensitive adhesive layer shown in FIG. 1 (b) has a structure in which the bubble-containing thermally conductive pressure-sensitive adhesive layer 2 is formed on one surface of the substrate 3 and a pressure-sensitive adhesive layer 4 is formed on the other surface thereof. A pressure-sensitive adhesive sheet 12 having the bubble-containing thermally conductive pressure-sensitive adhesive layer shown in FIG 1 (c) has a structure in which the bubble-containing thermally conductive pressure-sensitive adhesive layer 2 is formed on one surface of the substrate 3. A pressure-sensitive adhesive sheet 13 having the bubble-containing thermally conductive pressure-sensitive adhesive layer shown in FIG. 1 (d) has a structure of being formed of the bubble-containing thermally conductive pressure-sensitive adhesive layer 2 only.

In the case of the structure in which the bubble-containing thermally conductive pressure-sensitive adhesive layer 2 is formed on one surface of the substrate 3 shown in FIG. 1 (c), a treated layer for preventing a stain or a flaw may be formed on the other surface on which the bubble-containing thermally conductive pressure-sensitive adhesive layer 2 is not formed of the substrate 3. As the treated layer for preventing a statin, in order to make a stain hardly adhere, for example, a treated layer obtained by processing the surface of a substrate with silicone, fluorine, or the like having a low surface tension can be used. The surface tension is not particularly limited and is preferably 50 dyne/cm or less, more preferably 40 dyne/cm or less, or further more preferably 30 dyne/cm or less. As the treated layer for preventing a flaw, for example, a hard coat layer having a high pencil hardness can be formed. The pencil hardness thereof is, for example, H or more, preferably 2 H or more, or more preferably 3 H or more.

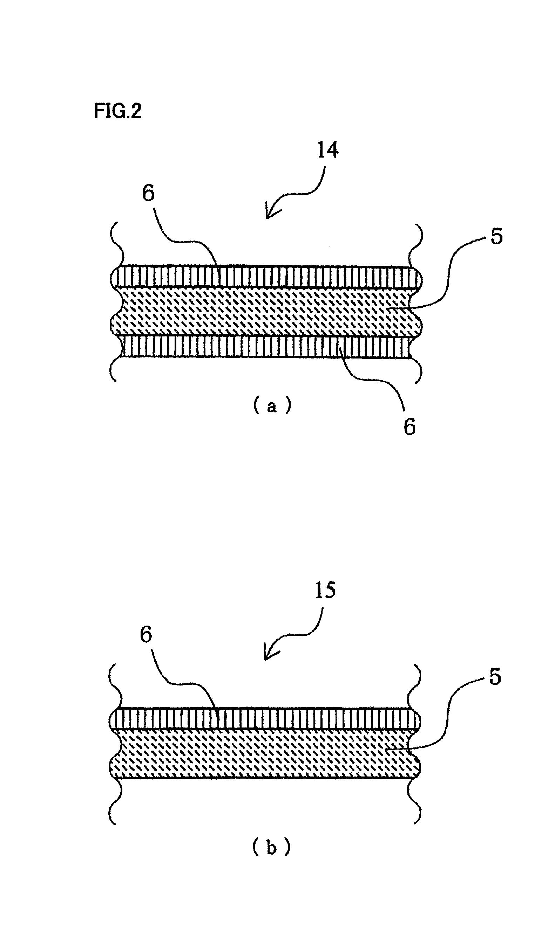

FIG. 2 shows schematic sectional views for partially illustrating an embodiment of a pressure-sensitive adhesive sheet of the present invention. In FIG 2, 14 and 15 represent a pressure-sensitive adhesive sheet having a bubble-containing thermally conductive substrate, respectively; 5 represents a bubble-containing thermally conductive substrate; and 6 represents a pressure-sensitive adhesive layer. A pressure-sensitive adhesive sheet 14 having a bubble-containing thermally conductive substrate 5 shown in FIG 2 (a) has a structure in which pressure-sensitive adhesive layers 6 are formed on both surfaces of the bubble-containing thermally conductive substrate 5. A pressure-sensitive adhesive sheet 15 having the bubble-containing thermally conductive substrate 5 shown in FIG. 2 (b) has a structure in which the pressure-sensitive adhesive layer 6 is formed on one surface of the bubble-containing thermally conductive substrate 5.

In the pressure-sensitive adhesive sheet having the bubble-containing thermally conductive substrate 5 shown in FIGS. 2 (a) and (b), the pressure-sensitive adhesive layer 6 may be a bubble-containing thermally conductive pressure-sensitive adhesive layer formed from a bubble-containing thermally conductive resin composition or may be another pressure-sensitive adhesive layer. In a double-sided pressure-sensitive adhesion sheet 14 with a substrate having a bubble-containing thermally conductive substrate, the two pressure-sensitive adhesive layers may be the same or different from each other. That is, the double-sided pressure-sensitive adhesion sheet 14 with a substrate having a bubble-containing thermally conductive substrate may have any one of the following structures: a structure in which the pressure-sensitive adhesive layers on both surfaces are the bubble-containing thermally conductive pressure-sensitive adhesive layers; a structure in which the pressure-sensitive adhesive layer on one surface is the bubble-containing thermally conductive pressure-sensitive adhesive layer and the pressure-sensitive adhesive layer on the other surface is the non-bubble-containing pressure-sensitive adhesive layer; and a structure in which the pressure-sensitive adhesive layers on both surfaces are the non-bubble-containing pressure-sensitive adhesive layers.

The pressure-sensitive adhesive sheet may be formed in a form of being wound in a roll shape or in a form of sheets being laminated. That is, the pressure-sensitive adhesive sheet of the present invention can have a form of a sheet, tape, or the like. When the pressure-sensitive adhesive sheet has a form of being wound in a roll shape, for example, the pressure-sensitive adhesive sheet can be fabricated by being wound in a roll shape in a state where the pressure-sensitive adhesive layer such as the bubble-containing thermally conductive pressure-sensitive adhesive layer is protected by a release treated layer that is formed on a back side of a release liner or a substrate.

(Bubble-Containing Thermally Conductive Resin Layer)

The bubble-containing thermally conductive resin composition layer formed from the bubble-containing thermally conductive resin composition can be formed, as described above, using the bubble-containing thermally conductive resin composition by using a known forming method. For example, the bubble-containing thermally conductive resin composition is applied onto a predetermined surface and then, drying, curing, and the like are performed as required, so that the bubble-containing thermally conductive resin composition layer can be formed. In the formation of the bubble-containing thermally conductive resin composition layer, as described above, preferably, the curing is performed by heating or irradiation of an activation energy beam. That is, after the bubble-containing thermally conductive resin composition is applied onto a predetermined surface using the bubble-containing thermally conductive resin composition containing a polymerization initiator such as a thermal polymerization initiator or a photopolymerization initiator, the curing is performed in a state of stably retaining the bubbles by heating or irradiation of the activation energy beam, so that the bubble-containing thermally conductive resin composition layer such as the bubble-containing thermally conductive pressure-sensitive adhesive layer and the bubble-containing thermally conductive substrate can be preferably formed.

Next, a method for fabricating the bubble- containing thermally conductive resin composition layer using the bubble- containing thermally conductive resin composition is described using, as an example, a method in which coating is performed using a liquid bubble- containing thermally conductive resin composition. As a method for fabricating a thermally conductive thermally conductive resin composition layer, a coating method that has been conventionally widely used can be used. For example, a coating liquid is applied onto a release liner to be dried and then, another release liner is bonded thereto, so that the bubble- containing thermally conductive resin composition layer can be fabricated.

An example of the forming method of the bubble-containing thermally conductive resin composition layer of the present invention includes an extrusion coating method using roll coater, kiss roll coater, gravure coater, reverse coater, roll brush coater, spray coater, dip roll coater, bar coater, knife coater, air knife coater, curtain coater, lip coater, die coater, or the like.

The thickness of the bubble-containing thermally conductive resin composition layer is not particularly limited and can be selected within a range of, for example, 100 to 5000 $\mu$m, preferably 200 to 4000 $\mu$m, or more preferably 300 to 3000 $\mu$m. When the thickness of the bubble-containing thermally conductive resin composition layer is less than 100 $\mu$m, the cushioning properties are reduced and the adhesive properties with respect to a curved surface or an uneven surface are reduced. When the thickness thereof is above 5000 $\mu$m, a layer or sheet having a uniform thickness is not easily obtained.

When the bubble-containing thermally conductive resin composition layer is used as a pressure-sensitive adhesive layer, in particular, the thickness of the bubble-containing thermally conductive pressure-sensitive adhesive layer can be selected within a range of, for example, 100 to 3000 $\mu$m, preferably 200 to 2000 $\mu$m, or more preferably 300 to 1000 $\mu$m. When the thickness of the bubble-containing thermally conductive pressure-sensitive adhesive layer is less than 100 $\mu$m, the bubble diameter may become larger than the thickness thereof, so that the adhesive properties are reduced because of a reduction in the adhesive area. When the thickness thereof is above 3000 $\mu$m, there may be a case where the adhesive force becomes large and a cohesive failure of a tackifier easily occurs in the case of being re-released.

When the bubble-containing thermally conductive resin composition layer is used as a substrate, the thickness of the bubble-containing thermally conductive substrate can be selected within a range of, for example, 300 to 5000 $\mu$m, preferably 400 to 4000 $\mu$m, or more preferably 500 to 3000 $\mu$m. When the thickness of the bubble-containing thermally conductive substrate is less than 300 $\mu$m, the cushioning properties with respect to a curved surface or an uneven surface are reduced. When the thickness thereof is above 5000 $\mu$m, there may be a case where the stiffness of the substrate becomes strong and it becomes difficult to bend or curve a sheet, or the cutting workability at the time of processing the sheet is reduced.

The bubble-containing thermally conductive resin layer may have a form of a single layer or multiple layers.

(Substrate)

In the pressure-sensitive adhesive sheet having the bubble-containing thermally conductive pressure-sensitive adhesive layer, when the substrate is a substrate, other than bubble-containing thermally conductive substrate of the present invention, an example of the substrate includes an appropriate thin leaf body such as a paper-based substrate including paper; a fiber-based substrate including cloth, non-woven fabric, or a net; a metal-based substrate including a metal foil or a metal plate; a plastic substrate including a plastic film or sheet; a rubber-based substrate including a rubber sheet; and a foaming material including a foaming sheet or a laminate thereof (in particular, a laminate of a plastic substrate with another substrate, a laminate of plastic films (or sheets) with each other, or the like). Examples of a material used in a plastic film or sheet include an olefin-based resin having an $\alpha$-olefin as a monomer component such as polyethylene (PE), polypropylene (PP), an ethylene-propylene copolymer, and an ethylene-vinyl acetate copolymer (EVA); a polyester-based resin such as polyethylene terephthalate (PET), polyethylene naphthalate (PEN), and polybutylene terephthalate (PBT); polyvinyl chloride (PVC); a vinyl acetate-based resin; polyphenylene sulfide (PPS); an amide-based resin such as polyamide (nylon) and wholly aromatic polyamide (aramid); a polyimide resin; and polyether ether ketone (PEEK). These materials can be used alone or in combination of two or more.

When the plastic substrate is used as the substrate, deformability such as the elongation may be controlled by stretching treatment or the like. As the substrate, when the bubble-containing thermally conductive pressure-sensitive adhesive layer is formed by curing using the activation energy beam, preferably, a substrate that does not inhibit the transmission of the activation energy beam is used.

The thickness of the substrate can be appropriately selected in accordance with the strength, the flexibility, the intended purpose, or the like and is generally 1000 μm or less, for example, 1 to 1000 μm, preferably 1 to 500 μm, or more preferably about 3 to 300 μm. The thickness thereof is not particularly limited to this. The substrate may have a form of a single layer or a form of laminated layers.

In order to increase the adhesiveness to the bubble-containing thermally conductive pressure-sensitive adhesive layer or the like, the surface of the substrate may be subjected to conventional surface treatment such as oxidation treatment by a chemical or physical method such as corona treatment, chromic acid treatment, ozone exposure, flame exposure, high-pressure shock exposure, and ionized radiation treatment, or may be subjected to coating treatment by a primer, a release agent, or the like.

(Pressure-Sensitive Adhesive Layer)

In the pressure-sensitive adhesive sheet having the bubble-containing thermally conductive pressure-sensitive adhesive layer and/or the bubble-containing thermally conductive substrate, when a pressure-sensitive adhesive layer, other than the bubble-containing thermally conductive pressure-sensitive adhesive layer of the present invention, (a non-bubble-containing thermally conductive pressure-sensitive adhesive layer) is used as the pressure-sensitive adhesive layer (for example, in the case of a double-sided pressure-sensitive adhesion sheet with a substrate in which a bubble-containing thermally conductive pressure-sensitive adhesive layer is formed on one surface of the substrate and a non-bubble-containing thermally conductive pressure-sensitive adhesive layer is formed on the other surface thereof), the non-bubble-containing thermally conductive pressure-sensitive adhesive layer can be formed by a known forming method of the pressure-sensitive adhesive layer using a known pressure-sensitive adhesive (for example, an acrylic pressure-sensitive adhesive, a rubber-based pressure-sensitive adhesive, a vinyl alkyl ether-based pressure-sensitive adhesive, a silicone-based pressure-sensitive adhesive, a polyester-based pressure-sensitive adhesive, a polyamide-based pressure-sensitive adhesive, a urethane-based pressure-sensitive adhesive, a fluorine-based pressure-sensitive adhesive, an epoxy-based pressure-sensitive adhesive, or the like). The thickness of the non-bubble-containing thermally conductive pressure-sensitive adhesive layer is not particularly limited and can be appropriately selected in accordance with the purpose, the usage, or the like.

(Release Liner)

In the present invention, in order to protect the adhesive surface (the pressure-sensitive adhesion surface) of the pressure-sensitive adhesive layer such as the bubble-containing thermally conductive pressure-sensitive adhesive layer and the non-bubble-containing thermally conductive pressure-sensitive adhesive layer, a release liner may be used. That is, it is not always necessary to use the release liner. The release liner is peeled off at the time of using the adhesive surface that is protected by the release liner (that is, at the time of bonding an adherend to the pressure-sensitive adhesive layer that is protected by the release liner).

As the release liner, a conventional release paper or the like can be used. To be specific, an example of the release liner includes a substrate having a release treated layer by a release treating agent on at least one surface thereof. In addition to this, examples thereof can include a low adhesive substrate formed of a fluorine-based polymer (for example, polytetrafluoroethylene, polychlorotrifluoroethylene, polyvinyl fluoride, polyvinylidene fluoride, a tetrafluoroethylene-hexafluoropropylene copolymer, a chlorofluoroethylene-vinylidene fluoride copolymer, or the like) and a low adhesive substrate formed of a non-polar polymer (for example, an olefin-based resin such as polyethylene and polypropylene). The release liner can be also used as a substrate for supporting the bubble-containing thermally conductive pressure-sensitive adhesive layer.

As the release liner, for example, a release liner in which a release treated layer is formed on at least one surface of a release liner substrate can be preferably used. Examples of the release liner substrate include a plastic substrate film (a synthetic resin film) such as a polyester film (a polyethylene terephthalate film or the like), an olefin-based resin film (a polyethylene film, a polypropylene film, or the like), a polyvinyl chloride film, a polyimide film, a polyamide film (a nylon film), and a rayon film and papers (wood free paper, Japanese paper, kraft paper, glassine paper, synthetic paper, top-coated paper, or the like). In addition to these, an example thereof also includes a multilayered component (a complex having two or three layers) of the above-described components by lamination, co-extrusion, or the like.

On the other hand, the release treating agent constituting the release treated layer is not particularly limited. Examples thereof can include a silicone-based release treating agent, a fluorine-based release treating agent, and a long chain alkyl-based release treating agent. These release treating agents can be used alone or in combination of two or more.

The thickness, the forming method, or the like of the release liner is not particularly limited.

In the present invention, desirably, the thermal conductivity of the bubble-containing thermally conductive resin composition layer is 0.25 W/mK or more, preferably 0.30 W or more, or more preferably 0.50 W/mK or more (usually, 20 W/mK or less). When the thermal conductivity of the bubble-containing thermally conductive resin composition layer is less than 0.25 W/mK, there may be a case where the thermal conductive properties are small, so that the function thereof as the thermally conductive sheet cannot be sufficiently developed.

In the present invention, desirably, the Asker C hardness of the bubble-containing thermally conductive resin composition layer is 50 or less, preferably 45 or less, or more preferably 40 or less (usually, 0 or more). When the Asker C hardness thereof is above 50, the followability to uneven surface or curved surface is reduced, the adhesiveness to an adhered deteriorates, and the thermally conductive properties are reduced.

In the present invention, desirably, the bubble-containing thermally conductive resin composition layer has the stress at the time of being compressed by 50 % with respect to the initial thickness thereof (hereinafter, 50 % compressive stress) of 200 N/cm$^2$ or less, preferably 150 N/cm$^2$ or less, or more preferably 100 N/cm$^2$ or less (usually, 10 N/cm$^2$ or more). By setting the 50 % compressive stress to be 100 N/cm$^2$ or less, when the bubble-containing thermally conductive resin composition layer is practically interposed between a circuit board and a cooling board such as a heat sink to be compressed and fixed by a screw clamp or the like, the bubble-containing thermally conductive resin composition layer easily compressed and deformed and has an excellent followability to unevenness. In addition, the thermally conductive particles themselves in the bubble-containing thermally conductive resin composition layer are brought into closer contact with each other than the usual, so that the improvement of the thermally conductive properties can be expected. On the other hand, when the 50 % compressive stress is above 200 N/cm$^2$, in the case where the bubble-containing thermally conductive resin composition layer is practically interposed between a circuit board and a cooling board such as a heat sink to be compressed and fixed by a screw clamp or the like, the bubble-containing thermally conductive resin layer has a poor compressibility and is used in a state where the repulsion stress is still left, so that it becomes easily unstable.

In the present invention, desirably, the volume resistivity (ASTM D-257) of the bubble-containing thermally conductive resin composition layer is $1 \times 10^{10}$ Ωcm or more, preferably $5 \times 10^{10}$ Ωcm or more, or more preferably $1 \times 10^{11}$ Ωcm or more (usually, $1 \times 10^{20}$ Ωcm or less). When the electric insulation is $1 \times 10^{10}$ Ωcm or more, a thermally conductive resin composition having a sufficient electric insulation can be composed.

In the present invention, when the bubble-containing thermally conductive resin composition layer is used as the bubble-containing thermally conductive pressure-sensitive adhesive layer, desirably, the pressure-sensitive adhesive force (180°C peel, the tensile rate of 300 mm/min) of the surface of the bubble-containing thermally conductive pressure-sensitive adhesive layer in the pressure-sensitive adhesive sheet with respect to an SUS board is, 0.5 N/20 mm or more, preferably 1.0 N/20 mm or more, or more preferably 3.0 N/20 mm or more (usually, 20 N/20 mm or less). When the pressure-sensitive adhesive force of the surface of the bubble-containing thermally conductive pressure-sensitive adhesive layer is 0.5 N/20 mm or more, the adhesiveness to the adherend is sufficient; the adaptability at a contact interfacial surface is excellent; and the contact thermal resistance is suppressed, so that the thermally conductive properties are improved. The pressure-sensitive adhesive sheet can be bonded to a heat sink, a circuit board, or the like to be allowed to temporarily adhere thereto. On the other hand, when the pressure-sensitive adhesive force is above 20 N/20 mm, there may be a case where re-bonding (reworkability) in the case of an error in bonding (misalignment) or peeling (repairability) of a thermally conductive member from an adherend at the time of discarding a used product becomes difficult.

In the above-described embodiments, the "sheet" is used as a concept including a shape such as "tape", "sheet", and "film".

Examples

In the following, the present invention will now be described in more detail by way of Examples. However, the present invention is not limited to the following Examples.

(Example 1)

After 0.05 parts by weight of trade name: "IRGACURE-651" (manufactured by BASF Japan Ltd.) and 0.05 parts by weight of trade name: "IRGACURE-184" (manufactured by BASF Japan Ltd.), as photopolymerization initiators, were blended into a monomer mixture in which 90 parts by weight of 2-ethylhexyl acrylate and 10 parts by weight of an acrylic acid, as monomer components, were mixed, the ultraviolet ray was applied to the obtained mixture until the viscosity (a BH viscometer, a No. 5 rotor, 10 rpm, a measurement temperature of 30°C) thereof reached about 15 Pa·s, so that a composition (a syrup) in which a part of the components was polymerized was fabricated.

0.1 parts by weight of 1,6-hexanedioldiacrylate as a polyfunctional monomer; 1 part by weight of trade name: "PLYSURF A212E" (manufactured by DAI-ICHI KOGYO SEIYAKU CO., LTD.) as a dispersant; 0.3 parts by weight of trade name: "SURFLON S-393" (an acrylic copolymer having a polyoxyethylene group and a fluorine-based hydrocarbon group in its side chain, Mw=8300) (manufactured by AGC SEIMI CHEMICAL CO., LTD.) as a fluorine-based surfactant; and 0.5 parts by weight of trade name: "IRGANOX 1010" (manufactured by BASF Japan Ltd.) as an oxidation inhibitor were added to the syrup. In addition, as thermally conductive particles, 150 parts by weight of trade name: "ALUNABEADS CB-A50S" (shape: a sphere shape, particle size: 50 $\mu$m) (manufactured by SHOWA DENKO K.K.), which was aluminum oxide powders, and as thermally conductive particles, 150 parts by weight of trade name: "ALUMINA AS-50" (shape: a particle shape, particle size: 9 $\mu$m) (manufactured by SHOWA DENKO K.K.), which was thermally conductive aluminum oxide powders, were added to the obtained mixture, so that a precursor composition was fabricated. Nitrogen was introduced into the precursor composition to allow bubbles to be mixed therein using a device in which on a disk having a through hole in the center thereof, a stator with many small teeth and a rotor that was opposed to the stator with teeth and had the same small teeth as those of the stator on the disk were provided. The mixing amount of the bubbles was adjusted so as to be about 20 volume % with respect to the total volume of the discharged liquid, so that a bubble-mixed thermally conductive resin composition was obtained.

The bubble-mixed thermally conductive resin composition was introduced to a roll coater with a tube having a diameter of 19 mm and a length of about 1.5 m. Then, the bubble-mixed thermally conductive resin composition was applied between release treated surfaces of substrate made of polyethylene terephthalate and having one surface subjected to release treatment so that the thickness thereof after being dried and cured was 1.0 mm. That is, the bubble-mixed thermally conductive resin composition was sandwiched between the substrate made of polyethylene terephthalate. Next, the ultraviolet ray at an illuminance of about 5 mW/cm$^2$ was applied to the obtained product from both sides thereof for 3 minutes, so that the bubble-mixed thermally conductive resin composition was cured and in this way, a pressure-sensitive adhesive sheet having a pressure-sensitive adhesive layer prepared from the bubble-mixed thermally conductive resin composition was fabricated.

(Example 2)

A pressure-sensitive adhesive sheet was fabricated in the same manner as in Example 1, except that as the thermally conductive particles, 150 parts by weight of trade name: "HIGILITE H-32" (shape: a pulverized shape, particle size: 8 $\mu$m) (manufactured by SHOWA DENKO K.K.), which was aluminum hydroxide powders, was added.

(Example 3)

After 0.05 parts by weight of trade name: "IRGACURE-651" (manufactured by BASF Japan Ltd.) and 0.05 parts by weight of trade name: "IRGACURE-184" (manufactured by BASF Japan Ltd.), as photopolymerization initiators, were blended into a monomer mixture in which 80 parts by weight of 2-ethylhexyl acrylate, 1.5 parts by weight of hydroxyethyl acrylamide, 7 parts by weight of N-vinylpyrrolidone, and 11.5 parts by weight of 2-methoxyethyl acrylate, as monomer components, were mixed, the ultraviolet ray was applied to the obtained mixture until the viscosity (a BH viscometer, a No. 5 rotor, 10 rpm, a measurement temperature of 30°C) thereof reached about 15 Pa·s, so that a composition (a syrup) in which a part of the components was polymerized was fabricated.

0.05 parts by weight of dipentaerythritol hexaacrylate as a cross-linking agent; 1.5 parts by weight of trade name: "PLYSURF A212E" (manufactured by DAI-ICHI KOGYO SEIYAKU CO., LTD.) as a dispersant; and 1.0 part by weight of trade name: "SURFLON S-393" (an acrylic copolymer having a polyoxyethylene group and a fluorine-based hydrocarbon group in its side chain, Mw=8300) (manufactured by AGC SEIMI CHEMICAL CO., LTD.) as a fluorine-based surfactant were added to the syrup. In addition, as thermally conductive particles, 175 parts by weight of trade name: "HIGILITE H-32" (shape: a pulverized shape, particle size: 8 $\mu$m) (manufactured by SHOWA DENKO K.K.), which was aluminum hydroxide powders, and as thermally conductive particles, 175 parts by weight of trade name: "HIGILITE H-10" (shape: a pulverized shape, particle size: 55 $\mu$m) (manufactured by SHOWA DENKO K.K.), which was aluminum hydroxide powders, were added to the obtained mixture, so that a precursor composition was fabricated. Nitrogen was introduced into the precursor composition to allow bubbles to be mixed therein using a device in which on a disk having a through hole in the center thereof, a stator with many small teeth and a rotor that was opposed to the stator with teeth and had the same small teeth as those of the stator on the disk were provided. The mixing amount of the bubbles was adjusted so as to be about 20 volume % with respect to the total volume of the discharged liquid, so that a bubble-mixed thermally conductive resin composition was obtained.

A pressure-sensitive adhesive sheet was fabricated in the same manner as in Example 1, except that the above-described bubble-mixed thermally conductive resin composition was used.

(Comparative Example 1)

A pressure-sensitive adhesive sheet was fabricated in the same manner as in Example 1, except that the bubble-mixed thermally conductive resin composition fabricated without adding the thermally conductive particles therein was used.

(Comparative Example 2)

A pressure-sensitive adhesive sheet was fabricated in the same manner as in Example 1, except that the precursor composition was used without allowing the bubbles to be mixed therein.

(Comparative Example 3)

(Preparation of Acrylic Polymer Solution)

Using a reaction vessel equipped with a condenser tube, a nitrogen introducing tube, a thermometer, and a stirrer, 70 parts by weight of butyl acrylate, 30 parts by weight of 2-ethylhexyl acrylate, 3 parts by weight of an acrylic acid, 0.05 parts by weight of 4-hydroxybutyl acrylate, 0.1 parts by weight of 2,2'-azobisisobutyronitrile (an initiator), and 155 parts by weight of toluene (a solvent) were added and the inside of the system was sufficiently replaced with a nitrogen gas to be then heated at 80°C for 3 hours, so that an acrylic polymer solution having a solid content of 40.0 weight % was obtained.

(Preparation of Thermally Conductive Resin Composition)

As a tackifier resin, 30 parts by weight of trade name: "PENSEL D-125" (manufactured by Arakawa Chemical Industries, Ltd.), which was a rosin-based resin; as thermally conductive particles, 100 parts by weight of trade name: "HIGILITE H-32" (shape: a pulverized shape, particle size: 8 $\mu$m) (manufactured by SHOWA DENKO K.K.), which was aluminum hydroxide powders; as a dispersant, 1 part by weight of trade name: "PLYSURF A212E" (manufactured by DAI-ICHI KOGYO SEIYAKU CO., LTD.); and as a cross-linking agent, 2 parts by weight of trade name: "CORONATE L" (manufactured by NIPPON POLYURETHANE INDUSTRY CO., LTD.), which was a polyfunctional isocyanate compound, were blended into 100 parts by weight (the solid content) of the above-described acrylic polymer solution to be stirred for 15 minutes with a disperser, so that a thermally conductive resin composition was prepared.

(Fabrication of Thermally Conductive Sheet)

The obtained thermally conductive resin composition was applied to a release treated surface of a release liner obtained by treating one surface of polyethylene terephthalate by a silicone release agent so that the thickness of the applied product after drying was 45 $\mu$m to be dried at 70°C for 15 minutes and in this way, a thermally conductive layer was obtained. The thermally conductive layers were bonded to both surfaces of trade name: "Lumirror S10" (a thickness of 12 $\mu$m) (manufactured by TORAY INDUSTRIES, INC.), which was a polyethylene terephthalate film as a substrate, so that a thermally conductive double-sided adhesive sheet having a total thickness of 102 $\mu$m was fabricated.

(Test Evaluation)

The following tests of the pressure-sensitive adhesive sheets obtained in Examples and Comparative Examples were performed. The test results are shown in Table 1.

(Thermal Conductivity · Thermal Resistance)

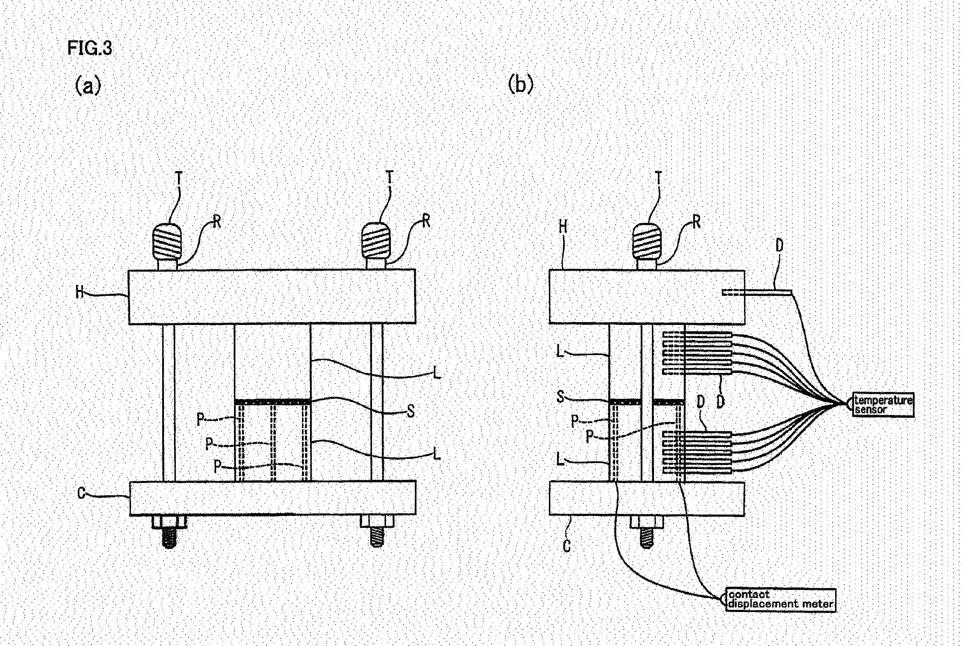

The measurement of the thermal conductivity was performed using a thermal property evaluation apparatus shown in FIG. 3.

To be specific, each of the pressure-sensitive adhesive sheets S (20 mm × 20 mm) in Examples and Comparative Examples was sandwiched between one pair of blocks (may be referred to as rods) L, each of which was made of aluminum (A5052, thermal conductivity: 140 W/m·K) and was formed to be a cube having one side of 20 mm, and the one pair of blocks L were bonded to each other via the adhesive sheet.

Then, the one pair of blocks L were disposed up and down between a heating element (heater block) H and a heat dissipating element (a cooling base board composed so that cooling water circulated inside thereof) C. To be specific, the heating element H was disposed on the upper- side block L and the heat dissipating element C was disposed below the lower- side block L.

At this time, the one pair of blocks L bonded to each other by the adhesive sheet S were positioned between one pair of pressure adjusting screws T that penetrated through the heating element and the heat dissipating element. Load cells R were disposed between the pressure adjusting screws T and the heating element H. The structure was made so as to measure a pressure at the time of allowing the pressure adjusting screws T to be tightened and the obtained pressure was used as a pressure applied to the adhesive sheet S.

Three probes P (a diameter of 1 mm), which were a contact displacement meter, were provided so as to penetrate through the lower-side block L and the adhesive sheet S from the side of the heat dissipating element C. At this time, the upper end portions of the probes P were in a state of being in contact with the lower surface of the upper-side block L. The structure was made so as to be capable of measuring a gap between the upper-side block L and the lower-side block L (the thickness of the adhesive sheet S).

Temperature sensors D were put in the heating element H and the upper-side and lower-side blocks L. To be specific, the temperature sensors D were put in one place in the heating element H and were put in five places with intervals of 5 mm in the up-down direction of each of the blocks L.

In the measurement, first, the pressure adjusting screws T were tightened to apply a pressure to the adhesive sheet S and the temperature of the heating element H was set to be 80°C, while cooling water at 20°C was circulated in the heat dissipating element C.

After the temperature of the heating element H and the upper-side and lower-side blocks L was stabilized, the temperature of the upper-side and lower-side blocks L was measured with the temperature sensors D. The heat flux passing through the adhesive sheet S was calculated from the thermal conductivity (W/m·K) and the temperature gradient of the upper-side and lower-side blocks L, and the temperature at the interfacial surfaces of the upper-side and lower-side blocks L with the adhesive sheet S was calculated. Using the obtained values, the thermal conductivity (W/m·K) and the thermal resistance (cm$^2$·K/W) at the pressure were calculated by using the heat conduction equation (the Fourier's law).

[0101]

$$Q = -\lambda \operatorname{grad} T$$

$$R = L/\lambda$$

Q: heat flux per unit area
gradT: temperature gradient
L: thickness of sheet
$\lambda$: thermal conductivity
R: thermal resistance

At this time, the thermal conductivity and the thermal resistance at a pressure of 25 N/cm$^2$ (250 kPa) applied to the adhesive sheet S were used.

(Adhesive Force)

The release liner on one surface of each of the pressure-sensitive adhesive sheets fabricated in Examples and Comparative Examples was peeled off; then, a PET film having a thickness of 25 $\mu$m was bonded thereto; and the bonded film was cut into pieces each having a width of 20 mm and a length of 150 mm to produce evaluation samples. The remaining release film was peeled from each of the evaluation samples and the resulting sample was bonded to an SUS 304 steel plate under an atmosphere of 23°C and 50 %RH by one reciprocation of a 2 kg roller. After the resulting product was allowed to stand at 23°C for 30 minutes, a peel test was performed at a peel angle of 180°C and a tensile rate of 300 mm/min using a universal tensile testing machine "TCM-1kNB" (manufactured by Minebea Co., Ltd.) and the adhesive force was measured.

(Asker C Hardness)

Each of the pressure-sensitive adhesive sheets fabricated in Examples and Comparative Examples was cut into pieces each having a width of 20 mm and a length of 20 mm. The laminates of the pieces so as to have a thickness of 4 mm were defined as evaluation samples. The Asker C hardness of the samples under an atmosphere of 23°C and 50 %RH was measured with an Asker C durometer (manufactured by KOBUNSHI KEIKI CO., LTD.).

(50 % Compressive Stress)

Each of the pressure-sensitive adhesive sheets fabricated in Examples and Comparative Examples was cut into pieces each having a width of 20 mm and a length of 20 mm. The laminates of the pieces so as to have a thickness of 3 mm were defined as evaluation samples. The peak pressure of the samples at the time of being compressed by 50 % with respect to the initial thickness using a universal tensile compression testing machine (manufactured by Minebea Co., Ltd.) at a rate of 10 mm/min was measured as a compressive stress.

(Adhesiveness Evaluation)

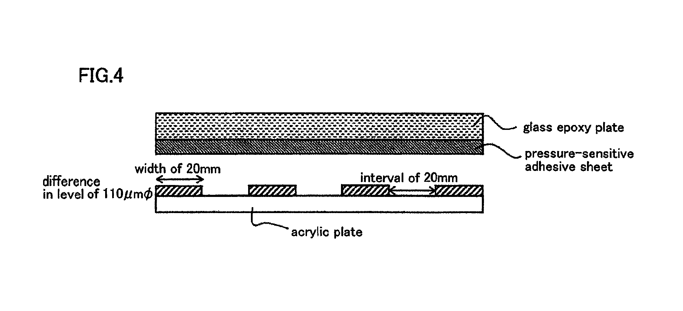

The release liner on one surface of each of the pressure-sensitive adhesive sheets fabricated in Examples and Comparative Examples was peeled off; then, a glass epoxy plate having a thickness of 2 mm was bonded thereto; and the bonded plate was cut into pieces each having a width of 20 mm and a length of 140 mm to produce evaluation samples. An adhesiveness test jig was used in which four pieces of stages (a width of 20 mm), each of which had a difference in level of 110 $\mu$m between the upper portion and the bottom portion on an acrylic plate, were disposed at intervals of 20 mm (ref: FIG. 4). After the surface of the pressure-sensitive adhesive layer of the sample was lightly bonded thereto in a way that it bridges between the stages of having a difference in level of 110 $\mu$m, one-way compression bonding was performed from the side of the glass epoxy plate with a 5 kg roller. Thereafter, an area obtained by allowing the pressure-sensitive adhesive sheet (the second surface side) to be brought into close contact with the acrylic plate was observed as image data from the side of the acrylic plate and the adhesion rate was calculated using an image processing software of trade name: "Scion Image" (manufactured by Scion Corporation).
[Table 1]

| Table 1 | | | | | | |
|---|---|---|---|---|---|---|
| | Ex. 1 | Ex. 2 | Ex. 3 | Comp. Ex. 1 | Comp. Ex. 2 | Comp.Ex. 3 |
| Thermal Conductivity (W/m·k) | 0.56 | 0.34 | 0.78 | 0.20 | 0.70 | 0.34 |
| Thermal Resistance (cm$^2$·k/W) | 15.3 | 24.8 | 2.0 | 37.3 | 14.5 | 3.9 |
| Adhesive Force (N/20 mm) | 13.4 | 15.7 | 12.1 | 212 | 13.5 | 9.5 |
| Asker C Hardness | 37 | 31 | 25 | 15 | 54 | 86 |
| 50% Compressive Stress (N/cm$^2$) | 94 | 56 | 45 | 29 | 370 | Not compressed by50% |
| Adhesion Rate (%) | 53 | 64 | 52 | 89 | 0 | 0 |

The pressure-sensitive adhesive sheets in Examples 1 to 3 have a structure in which the acrylic polymer serves as the base polymer and the bubble-containing thermally conductive resin composition layer having the thermally conductive particles and the bubbles serves as the pressure-sensitive adhesive layer, so that high adhesive properties, a low compressive stress, and the hardness are achieved and as a result, it is clear that the pressure-sensitive adhesive tape having high thermally conductive properties and excellent followability to uneven surface can be obtained.
On the other hand, in Comparative Example 1, the thermally conductive particles are not contained, so that the thermally conductive properties are poor. In Comparative Examples 2 and 3, the bubbles are not mixed, so that the 50 % compressive stress is high and the Asker C hardness is high and therefore, the pressure-sensitive adhesive sheets are hard, so that the followability to uneven surface is poor.
While the illustrative embodiments of the present invention are provided in the above description, such is for illustrative purpose only and it is not to be construed as limiting the scope of the present invention. Modification and variation of the present invention that will be obvious to those skilled in the art is to be covered by the following claims.

Industrial Applicability

The pressure-sensitive adhesive sheet including the bubble-containing thermally conductive resin composition layer is used for uses requiring thermally conductive properties and followability to unevenness.

**Claims**

1. A bubble-containing thermally conductive resin composition layer comprising:

    at least: (a) an acrylic polymer containing an alkyl (meth)acrylate as a monomer main component; (b) thermally conductive particles; and (c) bubbles.

2. The bubble-containing thermally conductive resin composition layer according to claim 1, wherein the thermal conductivity is 0.30 W/mK or more.

3. The bubble-containing thermally conductive resin composition layer according to claim 1, wherein the Asker C hardness is 50 or less.

4. The bubble-containing thermally conductive resin composition layer according to claim 1, wherein the content of the bubbles is 5 to 50 volume %.

5. The bubble-containing thermally conductive resin composition layer according to claim 1, wherein in the (b) thermally conductive particles, a particle having a first average particle size of 10 $\mu$m or more and a particle having a first average particle size of less than 10 $\mu$m are contained at a ratio of 1:10 to 10:1 (ratio by weight).

6. A method for producing a bubble-containing thermally conductive resin composition layer comprising at least: (a) an acrylic polymer containing an alkyl (meth)acrylate as a monomer main component; (b) thermally conductive particles; and (c) bubbles, wherein
    the bubble-containing thermally conductive resin composition layer is formed by applying an activation energy beam to a bubble-containing thermally conductive resin composition containing at least: (a') a monomer mixture containing an alkyl (meth)acrylate as a monomer main component or a partial polymer thereof; (b) thermally conductive particles; and (c) bubbles.

7. The bubble-containing thermally conductive resin composition layer according to claim 1, wherein the bubble-containing thermally conductive resin composition layer is capable of being used as a pressure-sensitive adhesive layer.

8. The bubble-containing thermally conductive resin composition layer according to claim 1, wherein the bubble-containing thermally conductive resin composition layer is capable of being used as a substrate.

9. A pressure-sensitive adhesive sheet having a pressure-sensitive adhesive layer, wherein
    the pressure-sensitive adhesive layer is formed by a bubble-containing thermally conductive resin composition layer formed from the bubble-containing thermally conductive resin composition layer obtained by applying an activation energy beam to a bubble-containing thermally conductive resin composition containing at least: (a') a monomer mixture containing an alkyl (meth)acrylate as a monomer main component or a partial polymer thereof; (b) thermally conductive particles; and (c) bubbles.

10. A pressure-sensitive adhesive sheet having a substrate and a pressure-sensitive adhesive layer on at least one surface of the substrate, wherein
    the substrate is formed from a bubble-containing thermally conductive resin composition containing at least: (a) an acrylic polymer containing an alkyl (meth)acrylate as a monomer main component; (b) thermally conductive particles; and (c) bubbles.

FIG.1

( a )

( b )

( c )

( d )

FIG.2

( a )

( b )

FIG.3

(a)

(b)

FIG.4

glass epoxy plate

pressure-sensitive
adhesive sheet

width of 20mm

difference
in level of 110μmφ

interval of 20mm

acrylic plate

## INTERNATIONAL SEARCH REPORT

International application No.

PCT/JP2011/076048

### A. CLASSIFICATION OF SUBJECT MATTER
*C08J9/12*(2006.01)i, *C08K3/00*(2006.01)i, *C08L33/06*(2006.01)i, *C09J7/02* (2006.01)i, *C09J11/04*(2006.01)i, *C09J133/04*(2006.01)i

According to International Patent Classification (IPC) or to both national classification and IPC

### B. FIELDS SEARCHED

Minimum documentation searched (classification system followed by classification symbols)
C08J9/12, C08K3/00, C08L33/06, C09J7/02, C09J11/04, C09J133/04

| Documentation searched other than minimum documentation to the extent that such documents are included in the fields searched | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2009-120808 A (Nitto Denko Corp.), 04 June 2009 (04.06.2009), claims; paragraphs [0025], [0028], [0041], [0046], [0061], [0085], [0087] & EP 2204425 A1 & WO 2009/054108 A1 & CN 101835862 A | 1-10 |
| X<br>A | JP 2006-213845 A (Nippon Zeon Co., Ltd.), 17 August 2006 (17.08.2006), claims; paragraphs [0030], [0031], [0040]; examples & KR 10-2006-0089681 A | 1-3,5,7-10<br>4,6 |
| A | JP 2006-022189 A (Nitto Denko Corp.), 26 January 2006 (26.01.2006), claims; examples (Family: none) | 1-10 |

☒ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 29 November, 2011 (29.11.11) | 13 December, 2011 (13.12.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

| INTERNATIONAL SEARCH REPORT | | International application No. |
|---|---|---|
| | | PCT/JP2011/076048 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 11-302614 A  (Nitto Denko Corp.),<br>02 November 1999 (02.11.1999),<br>claims<br>(Family: none) | 1-10 |

Form PCT/ISA/210 (continuation of second sheet) (July 2009)

**INTERNATIONAL SEARCH REPORT**

International application No.

PCT/JP2011/076048

**Box No. II       Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III       Observations where unity of invention is lacking (Continuation of item 3 of first sheet)**

This International Searching Authority found multiple inventions in this international application, as follows:

    See extra sheet

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
   ☐ The additional search fees were accompanied by the applicant's protest and, where applicable, the payment of a protest fee.

   ☐ The additional search fees were accompanied by the applicant's protest but the applicable protest fee was not paid within the time limit specified in the invitation.

   ☐ No protest accompanied the payment of additional search fees.

Form PCT/ISA/210 (continuation of first sheet (2)) (July 2009)

| INTERNATIONAL SEARCH REPORT | International application No. |
|---|---|
| | PCT/JP2011/076048 |

Continuation of Box No.III of continuation of first sheet (2)

The technical feature common to the invention of claim 1 and the inventions of claims 6, 9 and 10 is an air bubble-containing heat conductive resin composition layer which contains at least an acrylic polymer that contains an alkyl (meth)acrylate as a monomer main component, heat conductive particles and air bubbles. The common technical feature, however, cannot be considered as a special technical feature since it does not make a contribution over the prior art in view of the disclosure of documents 1 and 2. In addition, there is no other same or corresponding special technical feature between those inventions.

Consequently, the claims of this international application contain the following four groups of inventions.

(Invention group 1) the inventions of claims 1-5, 7 and 8
Inventions related to "an air bubble-containing heat conductive resin composition layer which is characterized by containing at least an acrylic polymer that contains an alkyl (meth)acrylate as a monomer main component, heat conductive particles and air bubbles".

(Invention group 2) the invention of claim 6
An invention related to "a method for producing an air bubble-containing heat conductive resin composition layer, which is characterized in that an air bubble-containing heat conductive resin composition layer is formed by irradiating an air bubble-containing heat conductive resin composition, which contains a monomer mixture containing an alkyl (meth)acrylate as a monomer main component or a partial polymer thereof, heat conductive particles and air bubbles, with an active energy ray".

(Invention group 3) the invention of claim 9
An invention related to "a pressure-sensitive adhesive sheet having a pressure-sensitive adhesive layer, which is characterized in that the pressure-sensitive adhesive layer is composed of an air bubble-containing heat conductive resin composition layer that is formed by irradiating an air bubble-containing heat conductive resin composition, which contains a monomer mixture containing an alkyl (meth)acrylate as a monomer main component or a partial polymer thereof, heat conductive particles and air bubbles, with an active energy ray".

(Invention group 4) the invention of claim 10
An invention related to "a pressure-sensitive adhesive sheet having a base and a pressure-sensitive adhesive layer arranged on at least one surface of the base, which is characterized in that the base is formed from an air bubble-containing heat conductive resin composition that contains at least an acrylic polymer that contains an alkyl (meth)acrylate as a monomer main component, heat conductive particles and air bubbles".

Form PCT/ISA/210 (extra sheet) (July 2009)

**EP 2 639 259 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11186473 B
- JP S5717030 B
- JP H748549 B